# EUROPEAN PATENT APPLICATION

(11) **EP 4 682 127 A1**
(43) Date of publication of application: **21.01.2026**
(21) Application number: 24771273.0
(22) Date of filing: 15.03.2024
(51) Int. Cl.: C04B 14/28, C04B 20/00, C04B 22/10, C04B 28/02, B28C 5/42, B28C 7/12, B28C 7/06, C04B 103/00, C04B 111/00

(54) **METHOD FOR IMPROVING STRENGTH OF CONCRETE BY ADDING, TO CEMENT, BASIC ALKALI MIXTURE SOLUTION USED FOR CARBON DIOXIDE CAPTURE**

(30) Priority: 15.03.2023 KR 20230034014
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR); CHOI, Hong Ki, Muan-gun Jeollanam-do 58579 (KR); SONG, Bong Kwan, Naju-si Jeollanam-do 58323 (KR); JUNG, Ha Eun, Mokpo-si Jeollanam-do 58616 (KR); JANG, Myeong Sub, Mokpo-si Jeollanam-do 58610 (KR); KIM, Hong Sik, Muan-gun Jeollanam-do 58567 (KR); LEE, Eun Bee, Gwangju 61755 (KR); SEO, Ju Yeon, Gwangyang-si Jeollanam-do 57704 (KR); LEE, Da Hun, Daejeon 34963 (KR)
(74) Representative: M. Zardi & Co S.A.
(86) International application number: PCT/KR2024/095569
(87) International publication number: WO 2024/191274

(57) **Abstract**

The present invention relates to a method for improving the strength of concrete by recycling a basic alkali mixture solution used for carbon dioxide capture and adding same to cement. According to one embodiment, the method comprises the steps of: (a) bringing a basic alkali mixture solution of specific components into contact with carbon dioxide in air to capture carbon dioxide; (b) forming a carbon dioxide reaction product containing sodium carbonate (Na₂CO₃) or sodium bicarbonate (NaHCO₃) by a reaction of the basic alkali mixture solution brought into contact with carbon dioxide; (c) injecting, in a preset ratio, the carbon dioxide reaction product into cement powder for concrete pouring; (d) mixing, for a preset time, the cement powder into which the carbon dioxide reaction product has been injected, thereby forming a concrete paste; and (e) pouring the formed concrete paste.

## Description

### Technical Field

The present disclosure relates to a method of improving concrete strength by adding a basic alkali mixture solution used for carbon dioxide capture to cement. More specifically, the present disclosure relates to a method of improving concrete strength by capturing carbon dioxide from the air using a basic alkali mixture solution and adding the basic alkali mixture solution with captured carbon dioxide to cement.

### Background Art

Recently, various types of natural disasters, including heatwaves, heavy flooding, and large-scale wildfires, have increased rapidly due to global climate change. This rapid increase in natural disasters is regarded as primarily resulting from sharply increased carbon dioxide in the atmosphere.

While the concentration of global carbon dioxide in the atmosphere had once again marked the highest recorded level in 2020, each of the national plans for reducing carbon emissions has fallen short of expectations. Accordingly, projections indicate that by 2030, carbon emissions are likely to increase by approximately 16% compared to those in 2010. If this trend continues, achieving the international goal of limiting the rise in global temperature to 1.5°C above the pre-industrial level will be challenging. As a result, analyses have indicated that by 2100, the global temperature is likely to increase by 2.7°C.

The World Meteorological Organization (WMO) revealed that the average concentration of global carbon dioxide in the atmosphere in 2020 reached the highest level on record at 413.2 ppm, 2.5 ppm higher than in 2019. Last year, the increase in the concentration of carbon dioxide exceeded the past ten-year average (2.4 ppm), indicating accelerated growth. Such a concentration of carbon dioxide corresponds to 149% of the pre-industrial level (in 1750).

Experts have pointed out that carbon dioxide in the atmosphere continues to increase in such a manner due to the properties of carbon dioxide remaining in the atmosphere for up to 200 years once emitted. Due to such properties, there has been a growing need worldwide to more rapidly reduce carbon emissions in order to cope with natural disasters caused by carbon dioxide.

Furthermore, the WMO also expressed concern that the Amazon region, which had previously absorbed carbon for a while, has turned into a source of carbon emissions due to the aftermath of development undertaken by the Brazilian government, thereby reducing the carbon absorption capacity of terrestrial ecosystems.

As described above, with rapidly increasing carbon dioxide worldwide and growing awareness of the need to reduce carbon dioxide, the carbon absorption capacity of terrestrial ecosystems alone has limitations in properly performing carbon reduction functions.

In the meantime, until recently, active development of technology for purifying foreign substances such as dust and particles in the air has been undertaken. However, the development of technology capable of continuously capturing carbon dioxide in the air and utilizing the carbon dioxide capture product generated by carbon dioxide capture has not been making satisfactory progress. Thus, there has been an urgent demand for the development of technology in this regard.

The applicant of the present disclosure has previously developed a high-efficiency basic alkali mixture solution for carbon dioxide capture and filed a patent application, which is currently registered.

Hence, due to the recent acceleration of global warming, technology for capturing carbon dioxide is being developed. Accordingly, there has been an urgent demand for carbon capture and storage (CCS) technology capable of permanently isolating captured carbon dioxide, so extensive research is actively undertaken in this regard.

### Disclosure

### Technical Problem

The present disclosure has been devised to address the issues described above, and aims to provide a method of improving concrete strength by recycling a basic alkali mixture solution used for carbon dioxide capture and adding the recycled basic alkali mixture solution to cement.

The technical problems to be addressed by the present disclosure are not limited to those mentioned above, and other technical problems not mentioned can be clearly understood by those skilled in the art to which the present disclosure pertains, from the following description.

### Technical Solution

In order to achieve the above objective, a method of improving concrete strength by recycling a basic alkali mixture solution used for carbon dioxide capture and adding the recycled basic alkali mixture solution to cement, according to one embodiment of the present disclosure, is configured as including the following steps: (a) bringing a basic alkali mixture solution of specific components into contact with carbon dioxide in the air to capture carbon dioxide; (b) forming a carbon dioxide reaction product containing sodium carbonate (Na₂CO₃) or sodium bicarbonate (NaHCO₃) by a reaction of the basic alkali mixture solution brought into contact with the carbon dioxide; (c) injecting, in a preset ratio, the carbon dioxide reaction product into cement powder for concrete pouring; (d) mixing, for a preset time, the cement powder into which the carbon dioxide reaction product has been injected, thereby forming a concrete paste; and (e) pouring the formed concrete paste.

In addition, according to one embodiment, the basic alkali mixture solution is characterized by including: one or more oxides selected from the group consisting of SiO₂, Al₂O₃, Fe₂O₃, TiO₂, MgO, MnO, CaO, Na₂O, K₂O, and P₂O₃; one or more metals selected from the group consisting of Li, Cr, Co, Ni, Cu, Zn, Ga, Sr, Cd, and Pb; a crystallized synthetic zeolite prepared using an alumina-based raw material, a silica-based raw material, and sodium hydroxide; and one or more liquid compositions selected from the group consisting of sodium tetraborate (Na₂B₄O₇·10H₂O), sodium oxide (NaOH), sodium silicate (Na₂SiO₃), potassium hydroxide (KOH), and hydrogen peroxide (H₂O₂).

In addition, according to one embodiment, the carbon dioxide reaction product in Step (c) is characterized by being injected through spraying in an amount of 10 wt% or less, based on the cement powder for concrete pouring.

In addition, according to one embodiment, in Step (d), the cement powder into which the carbon dioxide reaction product has been injected is characterized by being mixed for the preset time, such that sodium carbonate (Na₂CO₃) or sodium bicarbonate (NaHCO₃) in the carbon dioxide reaction product reacts with the cement powder (Ca(OH)₂) to produce calcium carbonate (CaCO₃), thereby forming the concrete paste in which the produced calcium carbonate is infiltrated into cement pores.

In addition, according to one embodiment, the produced calcium carbonate (CaCO₃) is characterized by having an average particle size of less than 100 µm.

In addition, according to one embodiment, the carbon dioxide reaction product is characterized by being stored in a carbon dioxide reaction product tank provided at one side of a ready-mix concrete mixing drum and being sprayed into the cement powder inside the ready-mix concrete mixing drum using a full cone-type nozzle.

In addition, according to one embodiment, in Steps (c) and (d), the carbon dioxide reaction product is characterized by being continuously sprayed, 10 minutes before concrete pouring, into a ready-mix concrete mixing drum for 5 minutes, followed by uniformly mixing contents inside the ready-mix concrete mixing drum while continuously rotating the ready-mix concrete mixing drum for 5 minutes.

In addition, according to one embodiment, the full cone-type nozzle is characterized by spraying the carbon dioxide reaction product at a flow rate of 38.8 L/min based on a spray pressure of 0.5 kgf/cm² when a single nozzle is used, and spraying the carbon dioxide reaction product at a flow rate of 20.2 L/min based on a spray pressure of 0.7 kgf/cm² when two nozzles are used.

### Advantageous Effects

Embodiments of the disclosed technology can have effects, including the following advantages. However, the embodiments of the disclosed technology are not intended to encompass all of the above, so the scope of the disclosed technology should not be construed as being limited thereby.

According to one embodiment of the present disclosure, a carbon dioxide reaction product obtained by capturing carbon dioxide from the air is added to cement. As a result, the strength of concrete structures can be improved while the captured carbon dioxide can be permanently isolated. Accordingly, the present disclosure has the advantageous effects of contributing to the prevention of global warming by permanently isolating the captured carbon dioxide while improving the strength and stability of concrete structures.

### Description of Drawings

Figure 1 is a conceptual diagram illustrating a method of improving concrete strength by adding a basic alkali mixture solution used for carbon dioxide capture to cement, according to the present disclosure.
Figure 2 is a flowchart showing each step according to one embodiment of the present disclosure.
Figures 3a and 3b is a detailed specification diagram of a full-cone nozzle applied in the present disclosure, in which Figure 3a and Figure 3b show nozzle specifications and photographs of the nozzle during circular spraying, respectively.
Figure 4 is a diagram showing changes in flow rate depending on the specifications and pressure of the full-cone nozzle of Figures 3a and 3b.

### Best Mode

While the present disclosure can be variously modified and have various embodiments, specific embodiments are to be illustrated in the accompanying drawings and to be described in detail herein.

However, it should be understood that the present disclosure is not limited to the specific embodiments described herein, but includes all modifications, equivalents, and alternatives falling within the spirit and technical scope of the present disclosure.

It should be further understood that the terms "comprises", "includes", "has", and the like used in the present disclosure specify the presence of features, integers, steps, operations, elements, components, or combinations thereof stated herein, but do not preclude possible presence or addition of one or more other features, integers, steps, operations, elements, components, or combinations thereof.

Hereinafter, the present disclosure is to be described in detail.

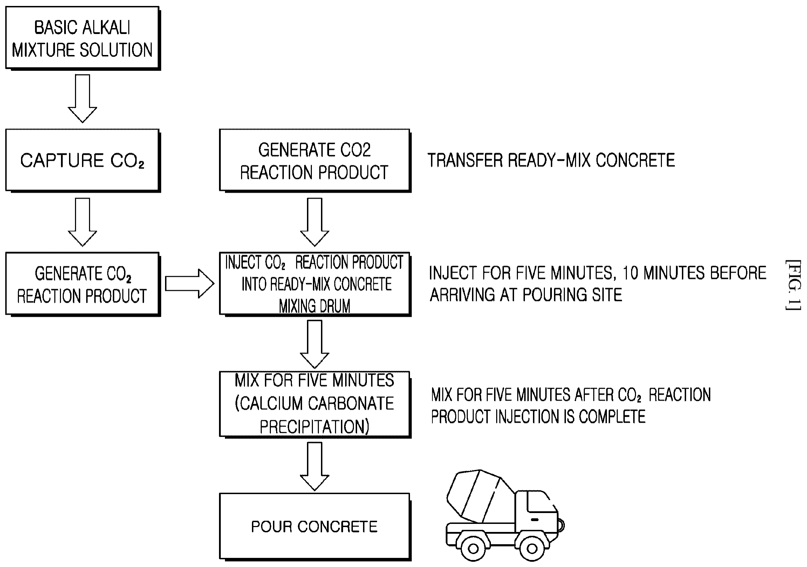

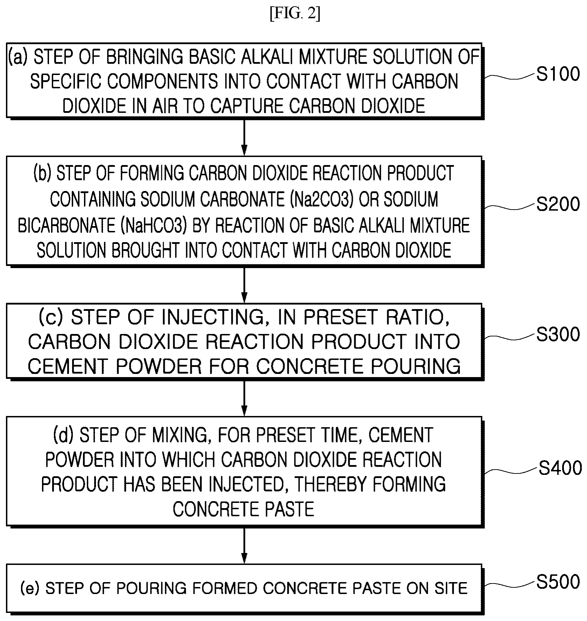

Figure 1 is a conceptual diagram illustrating a method of improving concrete strength by adding a basic alkali mixture solution used for carbon dioxide capture to cement, according to the present disclosure, and Figure 2 is a flowchart showing each step according to one embodiment of the present disclosure.

Referring to Figures 1 and 2, a method of improving concrete strength by recycling a basic alkali mixture solution used for carbon dioxide capture and adding the recycled basic alkali mixture solution to cement, according to one embodiment of the present disclosure, is composed of the following steps.

Step (a): A basic alkali mixture solution of specific components is brought into contact with carbon dioxide from the air to capture carbon dioxide (S100).

In this step, the basic alkali mixture solution, according to one embodiment, includes: one or more oxides selected from the group consisting of SiO₂, Al₂O₃, Fe₂O₃, TiO₂, MgO, MnO, CaO, Na₂O, K₂O, and P₂O₃; one or more metals selected from the group consisting of Li, Cr, Co, Ni, Cu, Zn, Ga, Sr, Cd, and Pb; a crystallized synthetic zeolite prepared using an alumina-based raw material, a silica-based raw material, and sodium hydroxide; and one or more liquid compositions selected from the group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

Furthermore, in addition to the liquid composition of the foregoing, water may be added in a ratio in the range of 1:1 to 1:5 to the basic alkali mixture solution according to the present disclosure. For example, the liquid composition and water may be maintained in a ratio in the range of 1:1 to 1:4, 1:1 to 1:3, 1:1 to 1:2, 1:2 to 1:5, 1:2 to 1:3, or 1:3 to 1:5.

In other words, the higher the ratio of a basic alkali mixture solution in the liquid composition and water, the higher the capture rate of carbon dioxide from the air. However, the ratio of water may be adjusted appropriately in consideration of cost aspects.

Step (b): A carbon dioxide reaction product containing sodium carbonate (Na₂CO₃) or sodium bicarbonate (NaHCO₃) is formed by a reaction of the basic alkali mixture solution brought into contact with carbon dioxide (S200).

In this step, according to one embodiment, the carbon dioxide reaction product separated by a separator may be sent to a carbon resource storage (not shown) for storage, and then recycled through resource utilization for other purposes in the future. For example, the carbon dioxide reaction product may contain sodium carbonate (Na₂CO₃) or sodium bicarbonate (NaHCO₃).

The carbon dioxide reaction product may be produced by the reaction of the basic alkali mixture solution with carbon dioxide, as shown in <Reaction Formula 1>.

<Reaction Formula 1> 2NaOH + CO₂ → Na₂CO₃ + H₂O [42] Na₂CO₃ + H₂O + CO₂ → 2NaHCO₃

A waste solution in the resulting product, other than the carbon dioxide reaction product, is transferred to a wastewater treatment tank (not shown) and discarded. For example, the waste solution may include illite minerals, water, and the like contained in the basic alkali mixture solution that has finished serving as a catalyst.

Step (c): The carbon dioxide reaction product is injected into cement powder for concrete pouring in a preset ratio (S300).

In this step, the carbon dioxide reaction product is injected through spraying in an amount of 10 wt% or less, based on the cement powder for concrete pouring.

According to one embodiment, the carbon dioxide reaction product, in an amount corresponding to 1 to 10 wt% of the weight of the cement introduced, was introduced to ready-mix concrete. In general, 300 kg of cement is introduced per 1 m³ of concrete, so the maximum amount of the carbon dioxide reaction product introduced is 30 kg. When applying this calculation to ready-mix concrete, the capacity of one ready-mix concrete vehicle is approximately 6 m³, so the amount of the carbon dioxide reaction product introduced per ready-mix concrete vehicle is up to 180 kg.

Spraying may be configured in such a manner that a separate carbon dioxide reaction product tank (not shown) is provided on the outside of the ready-mix concrete vehicle, and a spray nozzle is connected from the tank to the inside of the ready-mix concrete mixing drum.

In this state, spraying of the carbon dioxide reaction product into the ready-mix concrete mixing drum is started 10 minutes before concrete pouring and performed for approximately 5 minutes, followed by continuously rotating the ready-mix concrete mixing drum while uniformly mixing the contents thereinside for another 5 minutes to achieve uniform mixing.

In this case, for the spray nozzle from which the carbon dioxide reaction product is sprayed, a full cone-type nozzle is recommended. Since approximately 180 L needs to be introduced for 5 minutes, one or two nozzles with a flow rate of 36 L/min or more for processing may be used.

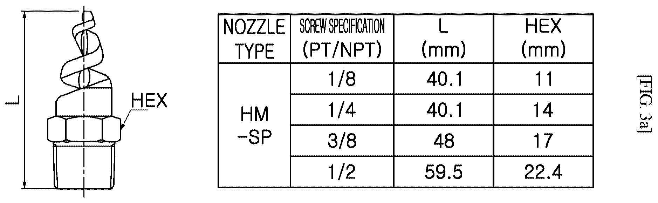

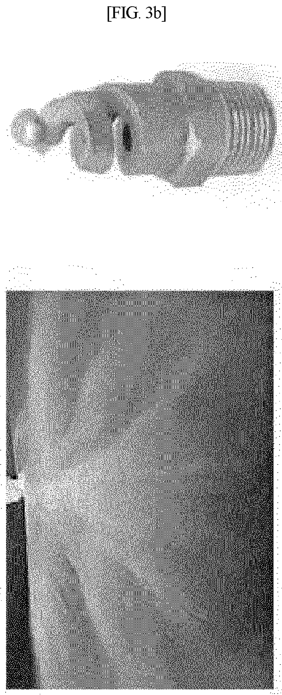

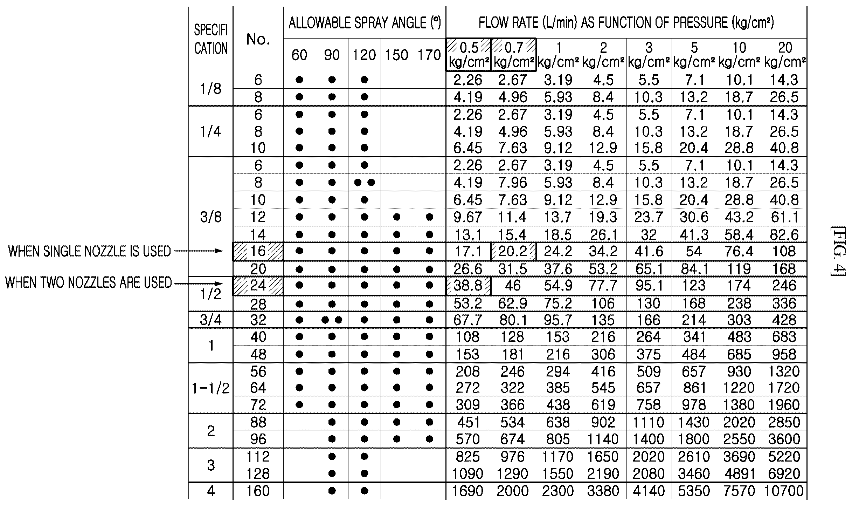

Figure 3 is a detailed specification diagram of the full-cone nozzle applied in the present disclosure, in which (a) and (b) show nozzle specifications and photographs of the nozzle during circular spraying, respectively, and Figure 4 is a diagram showing changes in flow rate depending on the specifications and pressure of the full-cone nozzle of Figure 3.

According to one embodiment, details of the full-cone nozzle (Hanmi Nozzle Co., Ltd., HM-SP) applied in the present as described above, including characteristics, materials, and specifications, are as follows.
- Characteristics: Being free from clogging due to the absence of internal vanes, having a spiral body structure, and
   allowing adjustment of various spray angles
- Materials: BRASS, polypropylene (PP), Teflon (TEF), stainless steel (SUS) in all materials, and other materials available
- Specifications: See Figure 3a
- Photograph of circular spraying: See Figure 3b

For example, referring to Figure 4, when a single nozzle is used, the HM24 nozzle (based on a flow rate of 38.8 L/min and a spray pressure of 0.5 kgf/cm²) is recommended, while when two nozzles are used, the HM16 nozzle (based on a flow rate of 20.2 L/min and a spray pressure of 0.7 kgf/cm²) may be used. Then, the carbon dioxide reaction product was sprayed into the ready-mix concrete mixing drum through the nozzle for approximately 5 minutes.

Step (d): The cement powder into which the carbon dioxide reaction product has been injected is mixed for a preset time, thereby forming a concrete paste (S400).

In this step, the cement powder into which the carbon dioxide reaction product has been injected is mixed for the preset time, such that sodium carbonate (Na₂CO₃) or sodium bicarbonate (NaHCO₃) in the carbon dioxide reaction product reacts with the cement powder (Ca(OH)₂) to produce calcium carbonate (CaCO₃), thereby forming the concrete paste in which the produced calcium carbonate is densely infiltrated into cement pores.

According to one embodiment, the cement powder into which the carbon dioxide reaction product has been injected is mixed for approximately 5 minutes, such that sodium carbonate (Na₂CO₃) or sodium bicarbonate (NaHCO₃) in the carbon dioxide reaction product reacts with the cement powder (Ca(OH)₂) to produce calcium carbonate (CaCO₃), as shown in <Reaction Formula 2>.

<Reaction Formula 2> Na₂CO₃ + Ca(OH)₂ → CaCO₃

As a result, the concrete paste in which the produced calcium carbonate is densely infiltrated into the cement pores is formed.

For reference, cement powder is a material serving as an inorganic adhesive in a concrete paste. In such cement powder, numerous gaps with a size of approximately 100 µm, on average, are present. The fractures of concrete structures begin with cracks occurring in the pores between the cement powder. In general, to improve resistance to such fractures, a strength enhancer such as silica fume (SF), micro CaCO₃ (MC), or lime sludge (LS) is added to concrete. As a result, the pores between the cement powder are filled with the strength enhancer, thereby enhancing the strength.

In this case, as the particle size of the strength-enhancing powder to be added becomes smaller, the pores between the cement powder need to be more densely filled with such powder. Thus, the particle size of this strength enhancer needs to be equal to or smaller than the pores between the cement powder, which is preferably less than 100 µm. When the particle size is, more preferably, less than 61 µm, the strength of concrete structures is known to be optimal.

The present disclosure is characterized by using the carbon dioxide reaction product, obtained by recycling the basic alkali mixture solution used for carbon dioxide capture, as the strength enhancer.

In other words, in Step (c) above, the carbon dioxide reaction product is injected through spraying in an amount of 10 wt% or less, based on the cement powder, thus forming dense particles of calcium carbonate (CaCO₃) in the concrete paste.

[Table 1] below shows the average particle size of calcium carbonate (CaCO₃) produced when the carbon dioxide reaction product, according to the present disclosure, is injected into the cement powder through spraying according to one embodiment.

Example: When carbon dioxide reaction product (Na₂CO₃) is sprayed into aqueous solution of cement powder (Ca(OH)₂)

**[Table 1]**

| No | Data | D(50%)(nm) |
|---|---|---|
| 1 | Na₂CO₃spray 1 | 3665.8 |
| 2 | Na₂CO₃spray 2 | 5964.5 |
| 3 | Na₂CO₃spray 3 | 11852.9 |
| Average | | 7161.1 |

(D50% above refers to the particle size at which the cumulative percentage of the particle size distribution reaches 50%, that is, the median value)

As a result of injecting the carbon dioxide reaction product (Na₂CO₃) into an aqueous solution of cement powder (Ca(OH)₂) through spraying and mixing for approximately 5 minutes, calcium carbonate (CaCO₃) precipitates having an average particle size of approximately 7.2 µm were produced. In addition, while the calcium carbonate infiltrated into the pores between the cement powder during mixing, these pores were filled with the calcium carbonate, thereby completing a dense concrete particle structure.

Comparative Example: when carbon dioxide reaction product (Na₂CO₃) is poured and injected into aqueous solution of cement powder (Ca(OH)₂)

**[Table 2]**

| No | Data | D(50%)(nm) |
|---|---|---|
| 1 | Na₂CO₃pour 1 | 363679.1 |
| 2 | Na₂CO₃pour 2 | 414394.8 |
| 3 | Na₂CO₃pour 3 | 7894.0 |
| Average | | 261989.0 |

(D50% above refers to the particle size at which the cumulative percentage of the particle size distribution reaches 50%, that is, the median value)

According to [Table 2] above for Comparative Example, as a result of injecting the carbon dioxide reaction product (Na₂CO₃) into an aqueous solution of cement powder (Ca(OH)₂) through pouring and mixing for approximately 5 minutes, calcium carbonate (CaCO₃) precipitates having an average particle size of approximately 262 µm were produced. However, this calcium carbonate, having a large particle size, failed to infiltrate uniformly into the pores between the cement powder during mixing.

Step (e): The formed concrete paste is poured on site (S500).

Thereafter, the compressive fracture strength of a concrete structure poured according to one embodiment described above, Comparative Example 1, and Comparative Example 2 (in the absence of a strength enhancer, that is, when only cement was poured) was compared. The results of the strength comparison are summarized in [Table 3] below.

**[Table 3]**

| Classification | Compressive fracture strength (N) |
|---|---|
| Example (spraying) | 919 |
| Comparative Example 1 (pouring) | 789 |
| Comparative Example 2 (No additive) | 752 |

Therefore, referring to the above results of the strength comparison, when spraying and mixing the carbon dioxide reaction product of the present disclosure during concrete mixing, calcium carbonate precipitates (powder) having a fine particle size were produced in the concrete paste. In addition, it was confirmed that the produced calcium carbonate precipitates infiltrated uniformly into the pores between the cement powder and formed a structure, thereby demonstrating the effect of significantly improving the strength of the poured concrete (a substitutive effect of a strength enhancer). In the meantime, depending on the concrete injection methods, the median particle size of the calcium carbonate was approximately 262 µm when injection was performed through pouring, as in Comparative Example 1, while fine and dense calcium carbonate particles, having a median particle size of approximately 7.2 µm, were able to be obtained when injection was performed through spraying, as in Example.

In addition, the test results of [Table 3], which compare the compressive strength of the concrete samples after pouring, confirmed that the concrete sample prepared according to the present disclosure exhibited an approximately 22% increase in compressive strength compared to the existing concrete sample (Comparative Example 2), thereby demonstrating the effect of increasing compressive strength (in other words, Comparative Example 2: 752 N → Example: increased to 919 N).

Although the embodiments of the present disclosure have been disclosed hereinabove with reference to the accompanying drawings, those skilled in the art to which the present disclosure pertains will appreciate that the present disclosure may be embodied in other specific forms without departing from the technical spirit or essential features thereof. Therefore, it should be understood that the embodiments described above are illustrative in all respects and not restrictive.

In addition, the scope of the present specification is defined by the appended claims rather than the detailed description presented above. Furthermore, all changes or modifications derived from the meaning and scope of the claims and the concept of equivalents should be construed as falling within the scope of the present specification.

In the meantime, the present specification and drawings disclose preferred embodiments of the present disclosure. Although specific terms have been used, these are used in a general sense merely to facilitate the description of the technical contents of the present specification and to aid in the understanding of the present disclosure, but are not intended to limit the scope of the present specification. In addition to the embodiments disclosed herein, it will be apparent to those skilled in the art to which the present disclosure pertains that other modifications based on the technical spirit of the present specification are implementable.

### Industrial Applicability

The present disclosure can be used extensively in a method of improving concrete strength by adding a basic alkali mixture solution used for carbon dioxide capture to cement.

## Claims

1. A method of improving concrete strength by adding a basic alkali mixture solution used for carbon dioxide capture to cement, the method comprising:
(a) bringing a basic alkali mixture solution of specific components into contact with carbon dioxide in air to capture carbon dioxide;
(b) forming a carbon dioxide reaction product containing sodium carbonate (Na₂CO₃) or sodium bicarbonate (NaHCO₃) by a reaction of the basic alkali mixture solution brought into contact with the carbon dioxide;
(c) injecting, in a preset ratio, the carbon dioxide reaction product into cement powder for concrete pouring;
(d) mixing, for a preset time, the cement powder into which the carbon dioxide reaction product has been injected, thereby forming a concrete paste; and
(e) pouring the formed concrete paste.

2. The method of claim 1, wherein the basic alkali mixture solution comprises:
one or more oxides selected from the group consisting of SiO₂, Al₂O₃, Fe₂O₃, TiO₂, MgO, MnO, CaO, Na₂O, K₂O, and P₂O₃;
one or more metals selected from the group consisting of Li, Cr, Co, Ni, Cu, Zn, Ga, Sr, Cd, and Pb;
a crystallized synthetic zeolite prepared using an alumina-based raw material, a silica-based raw material, and sodium hydroxide; and
one or more liquid compositions selected from the group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

3. The method of claim 1, wherein in the (c) injecting, the carbon dioxide reaction product is injected through spraying in an amount of 10 wt% or less, based on the cement powder for concrete pouring.

4. The method of claim 1, wherein in the (d) mixing, the cement powder into which the carbon dioxide reaction product has been injected is mixed for the preset time, such that sodium carbonate (Na₂CO₃) or sodium bicarbonate (NaHCO₃) in the carbon dioxide reaction product reacts with the cement powder (Ca(OH)₂) to produce calcium carbonate (CaCO₃), thereby forming the concrete paste in which the produced calcium carbonate is infiltrated into cement pores.

5. The method of claim 4, wherein the produced calcium carbonate (CaCO₃) has an average particle size of less than 100 µm.

6. The method of claim 3, wherein the carbon dioxide reaction product is stored in a carbon dioxide reaction product tank provided at one side of a ready-mix concrete mixing drum and is sprayed into the cement powder inside the ready-mix concrete mixing drum using a full cone-type nozzle.

7. The method of claim 1, wherein in the (c) injecting and the (d) mixing, the carbon dioxide reaction product is continuously sprayed, 10 minutes before concrete pouring, into a ready-mix concrete mixing drum for 5 minutes, followed by uniformly mixing contents inside the ready-mix concrete mixing drum while continuously rotating the ready-mix concrete mixing drum for 5 minutes.

8. The method of claim 6, wherein the full cone-type nozzle sprays the carbon dioxide reaction product at a flow rate of 38.8 L/min based on a spray pressure of 0.5 kgf/cm² when a single nozzle is used, and
the full cone-type nozzle sprays the carbon dioxide reaction product at a flow rate of 20.2 L/min based on a spray pressure of 0.7 kgf/cm² when two nozzles are used.
